# EUROPÄISCHE PATENTSCHRIFT

(11) **EP 1 481 981 B1**
(45) Veröffentlichungstag und Bekanntmachung des Hinweises auf die Patenterteilung: **15.08.2007**
(21) Anmeldenummer: 04012049.5
(22) Anmeldetag: 21.05.2004
(51) Int. Cl.: C07F 9/48, C09K 21/04, C07F 9/38, C07F 9/02, C07F 9/30

(54) **Styrol-Hypophosphit-Addukt sowie ein Verfahren zu dessen Herstellung und seine Verwendung**
Styrene hypophosphite adduct, preparation thereof and use
Adduit d'hypophosphite de styréne et procédé de production et utilisation du dernier

(30) Priorität: 30.05.2003 DE 10324568
(43) Veröffentlichungstag der Anmeldung: 01.12.2004
(73) Patentinhaber: Clariant Produkte (Deutschland) GmbH, 65929 Frankfurt am Main (DE)
(72) Erfinder: Bauer, Harald Dr, 50170 Kerpen (DE); Hörold, Sebastian Dr., 86420 Diedorf (DE); Krause, Werner Dr., 50354 Hürth (DE); Sicken, Martin Dr., 51149 Köln (DE); Staniek, Peter Dr., 79589 Binzen (DE)

(56) Entgegenhaltungen:
- FU, XIANG KAI ET AL.: "Preparation of Polystyrenylphosphonous Acid of Low Polymerization Degree and Influence of Initiators upon Free Radical Reaction Mechanism" CHINESE CHEMICAL LETTERS, Bd. 13, Nr. 3, 2002, Seiten 219-222, XP001204493

## Beschreibung

Die vorliegende Erfindung betrifft ein Styrol-Hypophosphit-Addukt, ein Verfahren zu dessen Herstellung und dessen Verwendung.

Fu, Yan und Chen beschreiben (Fu, Xiang Kai; Yan, Sui; Chen Li. Chinese Chemical Letters 2002, 13(3), 219-222) die Herstellung eines oligomeren Adduktes von Styrol an Natriumhypophosphit. Dabei wird die Reaktivität einer P-H-Funktion des Hypophosphites genutzt und in einer radikalinitiierten Addition Styroleinheiten in die P-H-Bindung eingeschoben. Es können bis zu 4 Styroleinheiten eingeschoben werden. Die Phosphorhaltige Endgruppe liegt als freie phosphonige Säure vor. Als Lösungsmittel wird Ethanol eingesetzt. Um direkt die Phosphonsäure zu erhalten, wird konzentrierte Schwefelsäure zugesetzt.

Nachteilig ist, dass sich dabei in erheblichem Maße Schwefelsäureester als Nebenprodukte bilden können.
Nachteilig ist auch, dass die bei der Synthese resultierenden Phosphorausbeuten unter 10 % liegen. Weiterhin ist nachteilig, dass das erhaltene Produkt - bei Azobisisobutyronitril (AIBN) als Radikalinitiator zwischen 18 bis 41 Gew.-% - erhebliche Anteile an einreagiertem Radikalinitiator enthält.

Die US-A-4,740,332 beschreibt die Herstellung von 4-Phenylbutylphosphoniger Säure unter Verwendung von stark schwefelsaurem Ethanol als Lösungsmittel und Azobisisobutyronitril als Initiator.

Devedjiev, Ganev, Stevanova und Borisov (I Devedjiev, V Ganev, R Stevanova, G Borisov. On the interaction between hypophosphorus acid and alcohols. Phosphorus and Sulfur. 31 (1987)7-11) beschreiben die Zersetzung von Hypophosphoriger Säure bei ihrer Umsetzung mit (kurzkettigen) Alkoholen. Diese Zersetzungsreaktion kann ein Grund sein für die bei Fu et. al. beschriebene geringe Phosphor-Ausbeute. Polystyrolbasierende Kunststoffe werden üblicherweise mit Halogenbasierenden Flammschutzmitteln ausgerüstet. Zum Teil wird Antimonoxid als Synergist eingesetzt. Nachteilig ist hierbei, dass sich im Brandfall Antimonhaltige und/oder halogenhaltige Brandgase entwickeln können.

Es bestand somit die Aufgabe, die Nachteile des Standes der Technik zur Herstellung des Styrol-Hypophosphit-Adduktes hinsichtlich der geringen Phosphorausbeuten zu vermeiden. Weiterhin sollte der Anteil an einreagiertem Initiator verringert werden.

Darüber hinaus sollte bei der Herstellung auf das brennbare und Nebenprodukte verursachende Ethanol verzichtet werden.

Das erfindungsgemäße Produkt weist einen hohen Phosphor-Anteil auf.

Weiterhin wurde überraschend gefunden, dass das erfindungsgemäße Styrol-Hypophosphit-Addukt in einem halogen- und antimonfreien Flammschutzmittel für Vinylpolymere (Polystyrolbasierende Polymere) einsetzbar ist.

Weiterhin wurde überraschend gefunden, dass das erfindungsgemäße Styrol-Hypophosphit-Addukt wirksam die Konzentration von monomerem Styrol im Polymer verringert.

Die Erfindung betrifft daher ein Styrol-Hypophosphit-Addukt der Formel (I)

{R₉ [C(Ph(R₁, R₂, R₃, R₄, R₅))R₆-CR₇R₈]ₙ}ₘP(O)(O 1/x M^{x+})(R₁₀)₂₋ₘ

in der
R₁, R₂, R₃, R₄, R₅, R₆, R₇, R₈ gleich oder verschieden sind und Wasserstoff, Alkyl, linear oder verzweigt, Aryl, Aralkyl, Oxoalkyl, Oxoaryl, Aminoalkyl und/oder Aminoaryl,
R₉ = H oder Radikalinitiatorrest
R₁₀ H
M^{x+} = Li, Na, K, Mg, Ca, Sr, Ba, Al, Ge, Sn, Bi, Sb, Pb, Ti, TiO, Zr, ZrO, Zn, Fe, Ce, Mn, und/oder eine protonierte Stickstoffbase mit der Wertigkeit x,
m = 1 oder 2 bedeutet und
n = 1 bis 100 bedeutet und die Anzahl der in die P-H-Bindung eingeschobenen Styroleinheiten C(Ph(R₁, R₂, R₃, R₄, R₅))R₆-CR₇R₈ darstellt.

Die Anordnung der Monomere in der Kette (C(Ph(R₁, R₂, R₃, R₄, R₅))R₆ CR₇R₈)ₙ ist bevorzugt zufällig zueinander, jedoch sind auch alle anderen isotaktischen, atataktischen, syndiotaktischen Konfigurationen erfindungsgemäß.

Bevorzugt sind R₁, R₂, R₃, R₄, R₅, R₆, R₇, R₈ gleich oder verschieden sind und bedeuten Wasserstoff; Methyl, Ethyl, n-Propyl-, n-Butyl, n-Pentyl; i-Propyl-, i-Butyl-, t-Butyl, Neo-Pentyl; Phenyl; Hydroxy, Methoxy, Ethoxy, Propoxy, Butoxy, Phenoxy; Amino, Methylamino-, Ethylmino-, Propylamino-, Butylamino-, N,N-Dimethylamino-, Diethylamino-, Dipropylamino-, Dibutylamino und n = 1 bis 10.

Besonders bevorzugt sind R₁, R₂, R₃, R₄, R₅, R₆, R₇, R₈ gleich oder verschieden sind und bedeuten Wasserstoff und/oder Methyl.

Bevorzugt weist das Styrol-Hypophosphit-Addukt einen Phosphorgehalt von 8 bis 25 % auf.

Besonders bevorzugt weist das Styrol-Hypophosphit-Addukt einen Phosphorgehalt von 11 bis 20 Gew.-% auf.

Bevorzugt weist das Aluminiumsalz des Styrol-Hypophosphit-Adduktes einen Phosphorgehalt von 8 bis 25 % Gew.-% auf.

Besonders bevorzugt weist das Aluminiumsalz des Styrol-Hypophosphit-Adduktes einen Phosphorgehalt von 11 bis 20 Gew.-% auf.

Bevorzugt weist das Zinksalz des Styrol-Hypophosphit-Adduktes einen Phosphorgehalt von 6 bis 20 % Gew.-% auf.

Besonders bevorzugt weist das Zinksalz des Styrol-Hypophosphit-Adduktes einen Phosphorgehalt von 7,5 bis 17,5 Gew.-% auf.
Bevorzugt weist das Styrol-Hypophosphit-Addukt eine Teilchengröße von 0,1 bis 1000µm auf, der Anteil der aus dem Initiator herrührenden Seitenketten R₉ liegt unter 40 % und das Styrolbindevermögen beträgt 260 bis 810 mg Styrol/g.

Besonders bevorzugt weist das Styrol-Hypophosphit-Addukt eine Teilchengröße von 10 bis 100 µm auf, der Anteil der aus dem Initiator herrührenden Seitenketten R₉ liegt unter 18 % und das Styrolbindevermögen beträgt 360 bis 650 mg Styrol/g.

Bevorzugt weist das Styrol-Hypophosphit-Addukt Aluminiumsalz eine Teilchengröße von 0,1 bis 1000µm auf, der Anteil der aus dem Initiator herrührenden Seitenketten R₉ liegt unter 40 % und das Styrolbindevermögen beträgt 260 bis 810 mg Styrol/g.

Besonders bevorzugt weist das Styrol-Hypophosphit-Addukt Aluminiumsalz eine Teilchengröße von 10 bis 100 µm auf, der Anteil der aus dem Initiator herrührenden Seitenketten R₉ unter liegt 18 % und das Styrolbindevermögen beträgt 360 bis 650 mg Styrol/g.

Bevorzugt weist das Styrol-Hypophosphit-Addukt Zinksalz eine Teilchengröße von 0,1 bis 1000 µm auf, der Anteil der aus dem Initiator herrührenden Seitenketten R9 liegt unter 40 % und das Styrolbindevermögen beträgt 190 bis 650 mg Styrol/g.

Besonders bevorzugt weist das Styrol-Hypophosphit-Addukt eine Teilchengröße von 10 bis 100 µm auf, der Anteil der aus dem Initiator herrührenden Seitenketten R9 liegt unter 18 % und das Styrolbindevermögen beträgt 240 bis 570 mg Styrol/g.

Roh-Polysytrol kann synthesebedingt 10 bis 100 ppm Styrol-Monomer enthalten. Überraschend wurde nun gefunden, dass das Styrol-Hypophosphit-Addukt wirksam Styrol-Monomer immobilisieren kann, wenn man es dem Polystyrol bei der Kunststoffverarbeitung beifügt.

Erfindungsgemäß beträgt das Styrol-Bindevermögen des Styrol-Hypophosphit-Adduktes 260 bis 810 %, bevorzugt 360 bis 650 Gew.-%.

Erfindungsgemäß beträgt das Styrol-Bindevermögen des Aluminiumsalzes des Styrol-Hypophosphit-Adduktes 260 bis 810 %, bevorzugt 360 bis 650 Gew.-%.

Erfindungsgemäß beträgt das Styrol-Bindevermögen des Zinksalzes des Styrol-Hypophosphit-Adduktes 190 bis 650 %, bevorzugt 240 bis 570 Gew.-%.

Die Erfindung betrifft auch ein Verfahren zur Herstellung von Styrol-Hypophosphit-Addukten, dadurch gekennzeichnet, dass man eine phosphorhaltige Verbindung und eine styrolhaltige Verbindung vorlegt und durch gleichmäßige Zudosierung eines Radikalinitiators zur Reaktion bringt.

In einer anderen Ausführungsform wird das Verfahren zur Herstellung von Styrol-Hypophosphit-Addukten so ausgeführt, dass man eine phosphorhaltige Verbindung vorlegt und durch gleichmäßige und gleichzeitige Zudosierung eines Radikalinitiators und einer styrolhaltigen Verbindung zur Reaktion bringt.

Alternativ kann man eine phosphorhaltige Verbindung und eine styrolhaltige Verbindung in einem Lösungsmittel vorlegen und zur Reaktion bringen und während des Reaktionsablaufs einen Radikalinitiator, direkt oder in einem Lösungsmittel, gleichmäßig zudosieren.

Bevorzugt beträgt das Mol-Verhältnis von phosphorhaltiger Verbindung zu styrolhaltiger Verbindung und zum Lösungsmittel jeweils 1 zu 1 bis 1 zu 100.

Besonders bevorzugt beträgt das Verhältnis von phosphorhaltiger Verbindung zu styrolhaltiger Verbindung und zum Lösungsmittel jeweils 1 zu 1 bis 1 zu 10.

Erfindungsgemäß werden 0,001 bis 10 mol-% Radikalinitiator pro Stunde (bezogen auf die Phosphorausgangskomponente) zudosiert.

Besonders bevorzugt wird der Radikalinitiator in Mengen von 0,01 bis 10 mol-%, bezogen auf die phosphorhaltige Verbindung, eingesetzt.
Bevorzugt handelt es sich bei der phosphorhaltigen Verbindung um Phosphorwasserstoff, Hypophosphorige Säure, Phosphorige Säure, unterdiphosphorige Säure, Pyrophosphorige Säure, Diphosphorige Säure und/oder deren Salze, Ester, Halogen- und sonstige Heteroatomverbindungen.

Bevorzugt liegen die phosphorhaltigen Verbindungen in Form ihrer Alkalisalze vor.

Bevorzugt handelt es sich bei der phosphorhaltigen Verbindung um Natriumhypophosphit.

Bevorzugt werden 0,001 bis 10 mol-% Initiator pro Stunde, bezogen auf die phosphorhaltige Verbindung, zudosiert.

Bevorzugt wird das erfindungsgemäße Verfahren so ausgeführt, dass man Natriumhypophosphit in einer Mischung aus einem Lösungsmittel und einer Mineralsäure vorlegt, auf Reaktionstemperatur erhitzt und während einer Zeit von 2 bis 10 h Radikalinitiator und Styrolkomponente gleichmäßig zudosiert und danach abkühlt und aufarbeitet, um das Natriumsalz des Styrol-Hypophosphit-Addukts zu erhalten.

Alternativ wird das erfindungsgemäße Verfahren so ausgeführt, dass man Natriumhypophosphit in Wasser und/oder Essigsäure vorlegt, auf Reaktionstemperatur erhitzt und während einer Zeit von 2 bis 10 h Radikalinitiator und Styrolkomponente in einem mindestens einem Lösungsmittel gleichmäßig zudosiert und danach abkühlt und aufarbeitet, um das Natriumsalz des Styrol-Hypophosphit-Addukts zu erhalten.

Die Erfindung betrifft auch ein phosphorhaltiges Flammschutzmittel, enthaltend das erfindungsgemäße Styrol-Hypophosphit-Addukt.

Bevorzugt enthält das phosphorhaltiges Flammschutzmittel 50 bis 99 Gew.-% Styrol-Hypophosphit-Addukt und 1 bis 50 Gew.-% eines oder mehrere Additive.

Bevorzugt handelt es sich bei dem Additiv um Stickstoffverbindungen nach den Formeln (III) bis (VIII) oder Gemische davon. 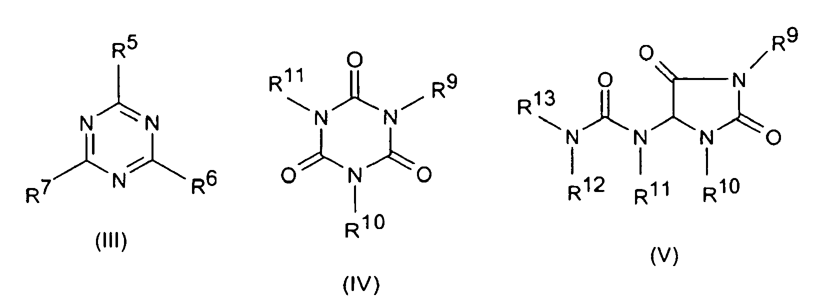 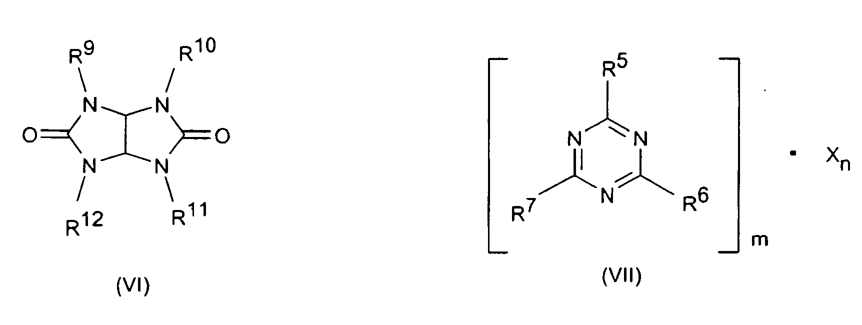 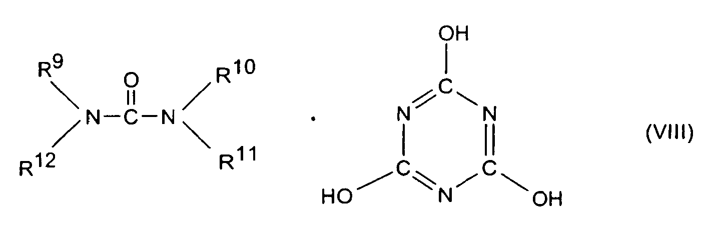 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹ , sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten.

Besonders bevorzugt handelt es sich bei dem Additiv um Melaminphosphat, Dimelaminphosphat, Melaminpyrophosphat, Melaminpolyphosphate, Melampolyphosphate, Melempolyphosphate und/oder Melonpolyphosphate; um Melaminkondensationsprodukte wie Melam, Melem und/oder Melon; um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin; stickstoffhaltige Phosphate der Formeln (NH₄)_{y} H_{3-y} PO₄ bzw. (NH₄ PO₃)_{z}, mit y gleich 1 bis 3 und z gleich 1 bis 10.000; um eine synthetische anorganische Verbindung und/oder ein mineralisches Produkt.

Bevorzugt weist das phosphorhaltige Flammschutzmittel eine Teilchengröße von 0,1 bis 2000 µm und eine verbleibende Feuchte von 0,01 bis 10 Gew.-% auf.

Besonders bevorzugt weist das phosphorhaltige Flammschutzmittel eine Teilchengröße von 10 bis 200 µm und eine verbleibenden Feuchte von 0,05 bis 1 Gew.-% auf.

Die Erfindung betrifft auch Pulverformmassen, enthaltend
1 bis 50 Gew.- % des phosphorhaltigen Flammschutzmittels
1 bis 99 Gew.-% polystyrolbasierendes Polymer oder Mischungen derselben
0 bis 60 Gew.-% Additive
0 bis 60 Gew.-% Füllstoff.

Die Erfindung betrifft auch Polymerformkörper, -Filme, -Fäden und -Fasern, enthaltend
1 bis 50 Gew.- % des phosphorhaltigen Flammschutzmittels
1 bis 99 Gew.-% polystyrolbasierendes Polymer oder Mischungen derselben
0 bis 60 Gew.-% Additive
0 bis 60 Gew.-% Füllstoff.

Die Erfindung betrifft auch Intumeszenz-Flammschutz-Beschichtung enthaltend
1 bis 50% des phosphorhaltigen Flammschutzmittels
0 bis 60% Ammoniumpolyphosphat
sowie 0 bis 80 Gew.-% Bindemittel, Schaumbildner, Füllstoffe und Additive. Verfahren zur Herstellung des Styrol-Hypophosphit-Adduktes

### Phosphorausgangskomponente

Erfindungsgemäß einsetzbar sind alle Phosphorverbindungen, die in mindestens einer tautomeren Form mindestens eine P-H-Gruppierung aufweisen. Bevorzugt sind Phosphorwasserstoff, Hypophosphorige Säure, Phosphorige Säure, Unterdiphosphorige, Pyrophosphorige Säure, Diphosphorige Säure deren Salze, Ester, Halogen- und sonstige Heteroatomverbindungen. Bevorzugt sind die Alkalisalze, ganz besonders bevorzugt die Natriumsalze.

### Styrolausgangskomponente

Bevorzugt sind Styrol; Alkylstyrol wie z.B. p-Methylstyrol, p-Ethylstyrol, p-Propylstyrol, p-Isopropylstyrol, p-Butylstyrol, p-tert-Butylstyrol, p-Phenylstyrol, o-Methylstyrol, o-Ethylstyrol, o-Propylstyrol, o-Isopropylstyrol, m-Methylstyrol, m-Ethylstyrol, m-Isopropylstyrol, m-Butylstyran, Mesitylstyrol, 2,4-Dimethylstyrol, 2,5-Dimethylstyrol, 3,5-Dimethylstyrol, etc.; Hydroxystyrole wie z.B. o-Hydroxystyrol, p-Hydroxystyrol and m-Hydroxystyrol; Alkoxystyrole wie z.B. o-, m- p-Methoxystyrol, o-, m-, p-Ethoxystyrol, 4-Methoxy-3-methylstyrol, p-Propoxystyrol, p-Phenoxystyrol, p-t-Butoxystyrol, p-Trityloxystyrol, etc.; Siloxystyroles wie p-Trimethylsiloxystyrole, p-t-Butyldimethylsiloxystyrole, p-Triisopropylsiloxystyrole; Halogenostyrole wie o-, m-, p-Chlorostyrol, o-, m-, p-Bromostyrol, o-, m-, p-Fluorostyrol, o-Methyl-pfluorostyrol, etc.; und auch Trimethylsilylstyrol, Vinylbenzoate, Divinylbenzol, etc. Bevorzugt sind p-Acetoxystyrole; Etherstyroles wie p-Vinylbenzylmethylether, p-Vinylbenzylethylether, p-vinylbenzyl-n-propylether, p-Vinylbenzylisopropylether, p-Vinylbenzyl n-butylether, p-Vinylbenzyl-t-butylether, 1-(4-Vinylphenyl)-1,1-dimethylmethylmethylether, 1-(4-Vinylphenyl)-1,1-dimethylmethylethylether, (1 -(4-vinylphenyl)-1,1 -dimethylmethylpropylether, 1-(4-Vinylphenyl)-1,1-dimethylmethylbutylether, 1-(4-Vinylphenyl)-1,1-diphenylmethylmethylether, 1-(4-Vinylphenyl)-1,1-diphenylmethylethylether, 1-(4-vinylphenyl)-1,1-diphenylmethylbutylether, 1-(4-Vinylphenyl)-1,1-dimethylmethyltrimethylsilylether und 1-(4-Vinylphenyl)-1,1-dimethylmethyltriethylsilylether; Alcohols wie p-Vinylbenzylalkohol, (4-Vinylphenyl)-1,1-dimethylmethanol, (4-Vinylphenyl)-1,1-diphenylmethanol und 2-(4-Vinylphenyl)ethanol; Amine wie 2-Aminostyrol, 3-Aminostyrol, 4-Aminostyrol, 3,4-Diaminostyrol, 4-Vinylbenzylamin and 2-(4-Vinylphenyl)ethylamin; Alkylsubstituierte Aminostyrole wie m-N,N-Dimethylaminostyrol, p-N,N-Dimethylaminostyrol, p-Vinylbenzyl-N,N-dimethylamin, p-Vinylbenzyl-N,N-diethylamin, p-Vinylbenzyl-N,N-di-n-propylamin, p-Vinylbenzyl-N,N-di-n-butylamin, p-(N,N-Dimethylamino)styrol, p-(N,N-Diethylamino)styrol, p-(N,N-Di-n-propylamino)styrol, p-(N,N-Di-n-butylamino)styrol, N-(p-Vinylbenzyl)pyrrolidin, N-(p-Vinylbenzyl)piperidin und N-(p-Vinylbenzyl)morpholin; Styrole mit Carbonyl Gruppen wie p-Vinylbenzoesäure, Methyl p-vinylbenzoat, Phenyl p-vinylbenzoat, Methyl 3-vinylsalicylat, p-Formylstyrol, p-Acetylstyrol und p-Vinylbenzophenon; Cyanostyrole wie o-, m-m p-Cyanostyrole; Mercaptostyrole und Alkylthiostyrole wie o-, m-, p-Mercaptostyrole, o-, m-, p-Methylthiostyrole, o-, m-, p-Ethylthiostyrol; p-Styryldiphenylphosphin; 3,5-Dimethyl-4-hydroxystyrole; 3,5-Diethyl-4-hydroxystyrol; 3,5-Dipropyl-4-hydroxystyrol; 3,5-Diisopropyl-4-hydroxystyrol; 3,5-Di-tert-butyl-4-hydroxystyrol; 3,5-Di-tert-butyl-4-aminostyrol and 3,5-Di-tert-butylcarboxystyrol.

Besonders bevorzugt sind Styrol, Alkylstyrole and Divinylbenzol. Besonders bevorzugt sind Styrol, alpha -Methylstyrol, p-Methylstyrol und Divinylbenzol.

Bevorzugt sind auch Styrolphenolpolyethylenglycolether, z.B. Emulsogen^{R} TS-Typen (z.B. TS160, TS200, TS290, TS540) von Clariant GmbH.

Nach der Erfindung können eine oder mehrere Typen von oben genannten Styrole in jeder gewünschten Konfiguration (co)polymerisiert sein.

### Initiator

Die Herstellung des oligomeren Phosphonigsäure-Styroladduktes kann im Slurry, in Lösung, in Emulsion oder in Substanz erfolgen.

Die Addition des Styrols kann durch einen anionischen Initiator, radikalischen Initiator oder photochemisch initiiert werden.

Überraschend wurde nun gefunden, dass sich die Phosphorausbeute über das im Stand der Technik beschriebene Maß steigern lässt, wenn der Initiator langsam, gleichmäßig und in niedrigen Dosierraten zur Phosphorausgangskomponente dosiert wird. Der Initiator kann dabei in reiner Form oder in einem Lösungsmittel gelöst getrennt dosiert werden. In einer weiteren Ausführungsform wird der Initiator in Styrol gelöst oder Initiator und Styrol gemeinsam in einem Lösungsmittel gelöst zudosiert.

Grundsätzlich sind für das Verfahren alle Systeme geeignet, die freie Radikale generieren. Besonders bevorzugt sind Peroxo-verbindungen wie Kaliumpersulfat, Natriumpersulfat, Ammniumpersulfat, Benzoylperoxid, Wasserstoffperoxid, Di-t-butylperoxid, Dicumylperoxid, 2,4-Dichlorobenzoylperoxid, Decanoylperoxid, Laurylperoxid, Cumolhydroperoxid, Pinenhydroperoxid, p-Menthanhydroperoxid, t-Butylhydroperoxid, Acetylacetoneperoxid, Methylethylketoneperoxid, Bernsteinsäureperoxid, Dicetylperoxydicarbonat, t-Butylperoxyacetat, t-Butylperoxymaleinsäure, t-Butylperoxybenzoat, Acetylcyclohexylsulfonylperoxid.

Weiterhin bevorzugt sind Azoinitiatoren wie 2-t-Butylazo-2-cyanopropan, Dimethylazodiisobutyrat, Azodiisobutyronitril, 2-t-Butylazo-1-cyanocyclohexan, 1-t-Amylazo-1-cyanocyclohexan. Weiterhin sind bevorzugt Alkylperketale wie 2,2-Bis-(t-butylperoxy)butan, Ethyl-3,3-bis(t-butylperoxy)butyrat, 1,1-Di-(t-butylperoxy)cyclohexan.

Besonders bevorzugt sind VAZO 52, VAZO 64 (AIBN), VAZO 67, VAZO 88, VAZO 44, VAZO 56, VAZO 68 der Fa. Dupont-Biesteritz, V-70 2,2'-Azobis(4-methoxy-2,4-dimethyl valeronitril),V-65 2,2'-Azobis(2,4-dimethylvaleronitril)V-601 Dimethyl 2,2'-azobis(2-methylpropionat), V-59 2,2'-Azobis(2-methylbutyronitril),V-40, VF-096 1,1'-Azobis(cyclohexane-1-carbonitril), V-30 1-[(cyano-1-methylethyl)azo]-formamid-VAm-110 2,2'-Azobis(N-butyl-2-methylpropionamid), VAm-111 2,2'-Azobis(N-cyclohexyl-2-methylpropionamid) VA-041 2,2'-Azobis[2-(5-methyl-2-imidazolin-2-yl)propan]dihydrochlorid, VA-044 2,2'-Azobis[2-(2-imidazolin-2-yl)propan] dihydrochlorid ,VA-046B 2,2'-Azobis[2-(2-imidazolin-2-yl)propandisulfatedihydrate, V-50 2,2'-azobis(2-amidinopropan) hydrochlorid, VA-057 2,2'-Azobis[N-(2-carboxyethyl)-2-methylpropionamidin]tetrahydrat, VA-058 2,2'-Azobis[2-(3,4,5,6-tetrahydropyrimidin-2-yl)propan] dihydrochlorid, VA-060 2,2'-Azobis{2-[1-(2-hydroxyethyl)-2-imidazolin-2-yl]propan}dihydrochlorid, VA-061 2,2'-Azobis[2-(2-imidazolin-2-yl)propan],VA-080 2,2'-Azobis{2-methyl-N-[1,1-bis(hydroxymethyl)-2-hydroxyethyl] propionamid,VA-085 2,2'-Azobis{2-methyl-N-[2-(1-hydroxybuthyl)]ropionamid},VA-086 2,2'-Azobis[2-methyl-N-(2-hydroxyethyl)propionamid]von Wako Chemicals.

Für die Herstellung kann ein Lösungsmittel eingesetzt werden. Bevorzugt sind Wasser, Alkohole, wie z.B. Methanol, n-Propylalkohol, iso-Propylalkohol, n-Butanol, Iso-Butanol, Amylalkohol etc. Bevorzugt sind weiterhin aliphatische Kohlenwasserstoffe wie Hexan, Heptan, Octan, und Petrolether; Aromatische Kohlenwasserstoffe wie Benzol, Toluol, Xylol, Ethylbenzol, Diethylbenzol und Chlorobenzol; Halogenkohlenwasserstoffe wie Methylenchlorid, Chloroform, 1,2-Dichloroethan, Chlorobenzol, etc. Tetrachlorkohlenstoff, Tetrabromoethylen; Alicyclische Kohlenwasserstoffe wie Cyclopentan, Cyclohexan, und Methylcyclohexan; Ketone wie Diisobutylketon und Methyl n-propylketon; Ester wie n-Propylacetat und n-Butylacetat etc. Eine oder mehrere dieser Verbindungen können allein oder in Kombination eingesetzt werden.

Besonders bevorzugt ist die ausschließliche Verwendung von Wasser als Lösungs- bzw. Dispergiermittel. Werden beispielsweise Alkohole wie Butanol etc. als Lösevermittler bzw. Dispergierhilfsmittel eingesetzt, dann im Unterschuss, d.h. unter 50% Anteil am Lösemittelsystem. Dadurch kann erfindungsgemäß die Disproportionierung des Hypophosphites verhindert werden.

Der Druck kann sich zwischen Atmosphärendruck und 196 MPa bewegen. Die Temperatur zwischen 50 und 150°C.

### Emulgierhilfsmittel

Vorteilhaft ist die Verwendung eines Emulgierhilfsmittels z.B. anionische Tenside wie z.B. Natriumrosinat, Natriumstearat, Kaliumoleat, Natriumlaurat und Natriumdodecylbenzolsulfonat; Kationische Tenside wie z.B. Cetyltrimethylammoniumbromid und Dodecylaminchlorid; Nichtionische Tenside wie z.B. Nonylpolyoxyethylenether und Octylphenylpolyoxyethylenether etc. Diese Emulgierungshilfsmittel können allein oder in Mischung miteinander eingesetzt werden.

Erfindungsgemäß werden 0,01 bis 10 % Emulgator, bezogen auf die eingesetzte Phosphormenge, bevorzugt, 0,1 bis 1 % Emulgator eingesetzt.

### Stoffverhältnisse

Erfindungsgemäß werden Phosphorausgangskomponente und Styrol in einem Lösungsmittel vorgelegt. Das Molverhältnis von Phosphorausgangskomponente zu Styrol ist bevorzugt 1 zu 1 bis 1 zu 100, besonders bevorzugt 1 zu 1 bis 1 zu 10, besonders bevorzugt 1 zu 1 bis 1 zu 3. Das Molverhältnis von Phosphorausgangskomponente zu Lösungsmittel ist bevorzugt 1 zu 1 bis 1 zu 100, besonders bevorzugt 1 zu 1 bis 1 zu 10. Bevorzugt wird der Radikalinitiator langsam zu der Mischung dosiert. Die Initiatoren werden erfindungsgemäß in Mengen von 0,01 bis 10 mol-% bezogen auf die Phosphorausgangskomponente eingesetzt

Bevorzugt wird die Phosphorausgangskomponente in einem Lösungsmittel vorgelegt. Das Molverhältnis von Phosphorausgangskomponente zu Lösungsmittel ist bevorzugt 1 zu 1 bis 1 zu 100, besonders bevorzugt 1 zu 1 bis 1 zu 10. Bevorzugt wird der Radikalinitiator langsam in Mischung mit dem Styrol zu der Phosphorausgangskomponente dosiert. Das Mol-Verhältnis von Phosphorausgangskomponente zu Styrol ist bevorzugt 1 zu 1 bis 1 zu 100, besonders bevorzugt 1 zu 1 bis 1 zu 10, besonders bevorzugt 1 zu 1 bis 1 zu 3. Die Initiatoren werden erfindungsgemäß in Mengen von 0,01 bis 10 mol-%, bezogen auf die Phosphorausgangskomponente eingesetzt.

Bevorzugt wird die Phosphorausgangskomponente in einem Lösungsmittel vorgelegt. Das Molverhältnis von Phosphorausgangskomponente zu Lösungsmittel ist bevorzugt 1 zu 1 bis 1 zu 100, besonders bevorzugt 1 zu 1 bis 1 zu 10. Bevorzugt werden der Radikalinitiator und das Styrol langsam zu der Phosphorausgangskomponente dosiert. Das Molverhältnis von Phosphorausgangskomponente zu Styrol ist bevorzugt 1 zu 1 bis 1 zu 100, besonders bevorzugt 1 zu 1 bis 1 zu 10, besonders bevorzugt 1 zu 1 bis 1 zu 3. Die Initiatoren werden erfindungsgemäß in Mengen von 0,01 bis 10 mol-% bezogen auf die Phosphorausgangskomponente eingesetzt.

Zur Herstellung des Styrol-Hypophosphit-Adduktes in der Säureform kann die Reaktionslösung sauer eingestellt werden. Bevorzugt ist ein Bereich von pH=0 bis 6, insbesondere von 0,5 bis 3. Die Reaktionslösung kann jedoch auch erst nach der Styroladdition sauer gestellt werden.

Als saure Komponenten sind bevorzugt Mineralsäuren wie Salzsäure, Schwefelsäure, Phosphorsäure geeignet.

Bevorzugt sind weiterhin Carbonsäuren wie Ameisensäure, Essigsäure, Oxalsäure.

Besonders bevorzugt ist es die Reaktion in Eisessig durchzuführen.

Besonders bevorzugt ist es die Reaktion in wässriger Lösung durchzuführen. Es ist dann ein pH-Bereich von 3 bis 7 bevorzugt.

In einer anderen Ausführungsform wird auf den Zusatz von Säure verzichtet und der pH-Wert der Reaktionslösung ist dann bevorzugt 4 bis 10, besonders bevorzugt 5 bis 8.

Wird keine Säure zugesetzt, entsteht das Styroladdukt als Salz. Die Salzlösung kann weiter als Ausgangsprodukt für die Herstellung von Salzen mit anderen Kationen dienen. Bevorzugt sind Li⁺, Na⁺, K⁺, Ca²⁺, Mg²⁺, Sr²⁺, Ba²⁺, Zn²⁺, Sn²⁺, Al³⁺, Bi³⁺, Fe²⁺, Fe³⁺, Mn²⁺, Mn³⁺, Ce³⁺, Ti⁴⁺, TiO²⁺, Zr⁴⁺, ZrO²⁺ und organische Stickstoffkationen wie die Grundkörper und Derivate des Ammoniaks, Melamins, Guanidins, Mono-, Di-, Triethanolamins, Piperazins, Triethylamins, Ethylendiamins und Harnstoffs.

Die Herstellung der Salze des Styrol-Hypophosphit-Adduktes erfolgt analog zu den in den Anmeldungen DE 197 52 735 A1 und DE 198 51 729 A1 beschriebenen Verfahren.

Dazu wird die Lösung des Styroladduktes mit einer Salzlösung des gewünschten Kations umgesetzt. Bevorzugt sind die jeweiligen gut wasserlöslichen Halogenide, Halogenoxosäuren, Schwefeloxosäuren (z.B. Sulfate), Boroxosäuren (z.B. Borate), Stickstoffoxosäuren (z.B. Nitrate). Die Wasserlöslichkeit ist bevorzugt größer als 20, besonders bevorzugt größer als 50%.

Die Umsetzung erfolgt bevorzugt in Form einer Fällung bzw. Kristallisation aus wässriger Lösung. Der pH-Wert der Fällungslösung beträgt bevorzugt 1 bis 10, ganz besonders bevorzugt 3 bis 8. Die Temperatur beträgt 0 bis 250°C, bevorzugt 10 bis 150°C.

Die betreffenden Kationen können auch über ihre Oxide, Hydroxide oder Oxid-Hydroxide eingesetzt werden. In diesem Fall sind hydrothermale Kristallisationsbedingungen mit Temperaturen zwischen 90 und 250°C und dem entsprechenden autogenen Lösemitteldruck bevorzugt.

Bevorzugt ist auch, das Styrol-Hypophosphit-Addukt in die Säure-Form zu bringen und mit den entsprechenden elementaren Metallen umzusetzen. Dies ist besonders bevorzugt bei metallischem Aluminium. Das Styroladdukt kann bevorzugt durch Behandlung mit einem sauren Kationentauscher in die saure Form gebracht werden.

Das Flammschutzmittel kann seinerseits einer Emulsion zur Styrolpolymerisation zugefügt werden und in das Polymer einreagiert werden.

### Phosphorhaltige Flammschutzmittel

Die Erfindung betrifft auch die Verwendung des Styrol-Hypophosphit-Adduktes in Phosphorhaltigen Flammschutzmitteln. Überraschend wurde gefunden, dass sich das Styrol-Hypophosphit-Addukt in Phosphorhaltige Flammschutzmitteln einsetzen lässt. Bevorzugt sind Flammschutzmittel enthaltend 50 bis 99 Gew.-% Styrol-Hypophosphit-Addukt und 1 bis 50 Gew.-% weitere Additive, wie z.B. Synergisten (wie in DE 196 14 424 A1 und DE 199 60 671 A1 beschrieben), Granulierhilfsmitteln z.B. Wachse, Polyamid-Copolymere wie ®Vestamelt 730-P1 der Fa. Degussa, Poylester-Copolymere wie ®Vestamelt 4481-P1 und 4680-P1 der Fa. Degussa und ®Griltex1582E P1 und 1365E P1 der Fa. Ems-Griltex), Staubreduktionsmitteln z.B.

Dioctylphtalat (DOP), Siliconöle, Mineralöle, Glycerin, Glycol etc) und Kompaktierhilfsmitteln.

Bei dem Additiv kann es sich um eine synthetische anorganische Verbindung und/oder ein mineralisches Produkt handeln. Geeignet sind Sauerstoffverbindungen des Siliciums, Magnesiumverbindungen, Metallcarbonate von Metallen der zweiten Hauptgruppe des Periodensystems, roten Phosphor, Zink- oder Aluminiumverbindungen.

Bevorzugt handelt es sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat.

### Herstellung des Phosphorhaltigen Flammschutzmittels

Das erfindungsgemäße Phosphorhaltige Flammschutzmittel kann in einer Ausführungsform hergestellt werden, indem man weiteres Additiv in flüssiger Form in einem geeigneten Mischer zu dem festen bewegten Styrol-Hypophosphit-Addukt gibt und 0,1 bis 100 Stunden bei 20 bis 200°C mischt und gegebenenfalls anschließend bei 20 bis 400°C trocknet. Bei Umgebungstemperatur feste weitere Additive werden dazu aufgeschmolzen.

Das erfindungsgemäße Phosphorhaltige Flammschutzmittel kann in einer weiteren Ausführungsform hergestellt werden, indem das feste weitere Additiv in einem geeigneten Mischer zu dem festen bewegten Styrol-Hypophosphit-Addukt gegeben, 0,1 bis 100 Stunden gemischt und dabei bis zum Schmelzpunkt des weiteren Additives erhitzt wird. Geeignete Temperaturen sind 20 bis 200°C.

Geeignete Mischer können sein: Pflugscharmischertypen der Fa. Lödige, Ringspaltmischertypen der Fa. Lödige, (z.B. Typ CB30), Flexomix-Mischertypen der Fa. Schugi, Ringspaltmischer Typ HEC der Fa. Niro, Ringschichtmischer (z.B. Typ K-TTE4) der Fa. Drais/Mannheim, Eirich-Mischer (z.B. Typ R02), Henschel-Mischer, Papenburg-Mischer, Telschig-Mischer (Typ WPA6), Zig-Zag-Mischer der Fa. Niro.

Die zunächst entstehende Produktmischung kann in einem geeigneten Trockner getrocknet beziehungsweise zum weiteren Kornaufbau getempert werden. Erfindungsgemäße Trockner können sein: Fließbetttrockner der Fa. Hosokawa Schugi (Typen: Schugi Fluid-Bed, Vometec Fließbett-Trockner), Wirbelbetttrockner der Fa. Waldner bzw. der Fa. Glatt, Turbo-Flugschichttrockner der Fa. Waldner, Spin-flash-Trockner der Fa. Anhydro sowie Trommeltrockner.

Bevorzugte Betriebsbedingungen im Fließbetttrockner sind: Lufteintrittstemperatur 120-280°C, Produkttemperatur 20 bis 200°C.

Bevorzugt ist die Teilchengröße des Phosphorhaltigen Flammschutzmittels 0,1 bis 2000 µm, besonders bevorzugt 10 bis 200 µm.

Die verbleibende Feuchte des erfindungsgemäßen Phosphorhaltigen Flammschutzmittels beträgt 0,01 bis 10 %, bevorzugt 0,05 bis 1 %.

Die Rieselfähigkeit der erfindungsgemäßen Phosphorhaltigen Flammschutzmittels beträgt, bestimmt in Anlehnung an DIN 53916 und ausgedrückt als der Cotangens des Schüttwinkels Phi, bevorzugt 1 bis 2, besonders bevorzugt 1,2 bis 1,8. Die Bestimmung der Rieselfähigkeit erfolgte mit dem in der DIN 53 916 angegebenen Testgerät nach PFRENGLE. (DIN 53 916 (Ausgabe August 1974): Bestimmung der Rieselfähigkeit von Pulvern und Granulaten.)

Die Staubneigung der erfindungsgemäßen Phosphorhaltigen Flammschutzmittels beträgt 1 bis 65 %, bevorzugt 5 bis 60 %. In eine Waschflasche werden 10 g des zu untersuchenden Materials eingewogen. Bei einem Gasstrom von 1 l/min wird durch das Material 20 min Stickstoff durchgeleitet. Die danach zurückbleibende Pulvermenge wird gewogen. Der ausgetragene Anteil wird durch die Einwaage dividiert und auf 100 % bezogen.

### Polymerformmassen

Die Erfindung bezieht sich weiterhin auf flammgeschützte Polymerformmassen.

Bevorzugt enthält die flammgeschützte Polymerformmasse
1 bis 50 Gew.- % phosphorhaltigen Flammschutzmittels
1 bis 99 Gew.-% Polystyrolbasierendes Polymer
0 bis 60 Gew.-% Additive
0 bis 60 Gew.-% Füllstoff.

Besonders bevorzugt enthält die flammgeschützte Polymerformmasse
5 bis 30 Gew.- % phosphorhaltigen Flammschutzmittels
5 bis 90 Gew.-% Polystyrolbasierendes Polymer
5 bis 40 Gew.-% Additive
5 bis 40 Gew.-% Füllstoff.

### Polystyrolbasierendes Polymer

Bevorzugte Anwendung für das erfindungsgemäßen phosphorhaltigen Flammschutzmittels ist die Verwendung als Flammschutzmittel in Polymeren. Besonders bevorzugt sind Vinylaromatische Homo- und Copolymere auf der Basis von Styrol, Chlorstyrol, alpha-Methylstyrol und p-Methylstyrol. Das Molekulargewicht dieser bekannten und im Handel erhältlichen Polymeren liegt im allgemeinen im Bereich von 1500 bis 2000000, vorzugsweise im Bereich von 50000 bis 1000000. In untergeordneten Anteilen (vorzugsweise nicht mehr als 20, insbesondere nicht mehr als 8 Gew.-%) können auch Comonomere wie (Methacylnitril oder (Meth)acrylsäureester am Aufbau beteiligt sein. Besonders bevorzugte vinylaromatische Polymere sind Polystyrol und schlagzäh modifiziertes Polystyrol. Bevorzugt sind Styrol-Acrylonitril (SAN-Copolymere z.B. wie in DE 199 20 276 A1 beschrieben), alpha-Methylstyrol-Acrylonitril Copolymere, Styrol-Methylmethacrylat Copolymere, Styrol-Maleinsäureanhydrid Copolymere, Styrol-Maleimid Copolymere, Styrol-Acrylat Copolymere, Acrylnitril-Butadien-Styrol (ABS) Polymere, Blends. Weiterhin bevorzugt sind Pfropfpolymerisate wie z.B. in DE 199 20 276 A1 beschrieben.

Handelsübliche Typen sind Polystyrol (BASF), Lacqrene (Atofina), Styron (Dow) etc. Polymer-Formkörper
Die Erfindung betrifft schließlich auch Polymer-Formkörper, -Filme, -Fäden und -Fasern, enthaltend die erfindungsgemäße granulare Flammschutzmittelzusammensetzung.

Bevorzugt enthalten die Polymer-Formkörper, -Filme, -Fäden und -Fasern
1 bis 50 Gew.- % phosphorhaltigen Flammschutzmittels
1 bis 99 Gew.-% Polystyrolbasierendes Polymer oder Mischungen derselben
0 bis 60 Gew.-% Additive
0 bis 60 Gew.-% Füllstoff.

Besonders bevorzugt enthalten die Polymer-Formkörper, -Filme, -Fäden und -Fasern
5 bis 30 Gew.- % phosphorhaltigen Flammschutzmittels,
5 bis 90 Gew.-% Polystyrolbasierendes Polymer oder Mischungen derselben
5 bis 40 Gew.-% Additive
5 bis 40 Gew.-% Füllstoff.

Es ist ebenso möglich, die flammhemmenden Zusätze einem fertigen Polmergranulat bzw. -pulver beizumischen und die Mischung direkt auf einer Spritzgussmaschine zu Formteilen zu verarbeiten.

Bevorzugte Füllstoffe sind Glas (bevorzugt in Kugel oder in Faserform), Oxide und/oder Hydroxide der Elemente der zweiten und dritten Hauptgruppe des Periodensystems der Elemente (bevorzugt Aluminium und Magnesium), Schichtsilicate und Tonminerale z.B. Bentonite, Montmorillonite, Hectorite, Saponite, gefällte/pyrogene/kristalline/amorphe Kieselsäuren, Kreide.

Bevorzugte Additive sind Synergisten, Antioxidantien, Lichtschutzmittel, Gleitmittel, Farbmittel, Nukleierungsmittel oder Antistatika. Beispiele für die verwendbaren Zusätze sind in EP 0 584 567 A1 angegeben.

### Beispiel 1 (Vgl.)

Unter Rühren werden 53g (0,5mol) Natriumhypophosphitmonohydrat, 15,6 g (0,15 mol) Styrol und 2,3 g (AIBN VAZO 64 (Dupont-Biesteritz) in einer Mischung von 243 g Ethanol und 24 g konzentrierter Schwefelsäure vorgelegt. Die Reaktionslösung wird 6h am Rückfluss gekocht (ca. 78°C). Danach werden weitere 1,6 g AIBN zugegeben und weitere 12 h gekocht. Nach dem Abkühlen wird die Lösung filtriert, zur Trockene eingedampft. Der Rückstand wird in 100 g Wasser aufgenommen und mit 100 g Ethylacetat extrahiert und das Extrakt zur Trockene eingedampft. Es werden 14,3 g Produkt mit einem P-Gehalt von 7,5 Gew.-% erhalten (6,9 % P-Ausbeute)

### Beispiel 2

Unter Rühren werden 53 g (0,5 mol) Natriumhypophosphitmonohydrat, 51,9 g (0,5 mol) Styrol in einer Mischung von 193 g Ethanol und 24 g konzentrierter Schwefelsäure vorgelegt. Während die Reaktionslösung 5h am Rückfluss gekocht (ca. 78°C) wird, werden 3,9 g (AIBN VAZO 64 (Dupont-Biesteritz), die in 50 g Ethanol gelöst sind, mit einer Pumpe zudosiert. Die Reaktionslösung wird wie in Beispiel 1 aufgearbeitet. Es werden 63,8 g Produkt mit einem P-Gehalt von 15,7 Gew.-% erhalten (64,7 % P-Ausbeute)

### Beispiel 3

Unter Rühren werden 53 g (0,5 mol) Natriumhypophosphitmonohydrat, in einer Mischung von 243 g Ethanol und 24 g konzentrierter Schwefelsäure vorgelegt. Während die Reaktionslösung 5 h am Rückfluss gekocht (ca. 78°C) wird, werden 3,9 g (AIBN VAZO 64 (Dupont-Biesteritz) und 51,9 g (0,5 mol) Styrol mit einer Pumpe zudosiert. Die Reaktionslösung wird wie in Beispiel 1 aufgearbeitet. Es werden 73,4g Produkt mit einem P-Gehalt von 18,9 Gew.-% erhalten (89,6 % P-Ausbeute)

### Beispiel 4

Unter Rühren werden 26,5 g (0,25 mol) Natriumhypophosphitmonohydrat, in einer Mischung von 243 g Ethanol und 24g konzentrierter Schwefelsäure vorgelegt. Während die Reaktionslösung 5h am Rückfluss gekocht (ca. 78°C) wird, werden 3,9 g (AIBN VAZO 64 (Dupont-Biesteritz) und 51,9 g (0,5 mol) Styrol mit einer Pumpe zudosiert. Die Reaktionslösung wird wie in Beispiel 1 aufgearbeitet. Es werden 59,2g Produkt mit einem P-Gehalt von 10,2 Gew.-% erhalten (78,0 % P-Ausbeute).

### Beispiel 5

Unter Rühren werden 26,5 g (0,25 mol) Natriumhypophosphitmonohydrat, in einer Mischung von 160 g Ethanol, 80 g Wasser und 24 g konzentrierter Schwefelsäure vorgelegt. Während die Reaktionslösung 5 h am Rückfluss gekocht (ca. 78°C) wird, werden 3,9 g (AIBN VAZO 64 (Dupont-Biesteritz) und 51,9 g (0,5 mol) Styrol mit einer Pumpe zudosiert. Die Reaktionslösung wird wie in Beispiel 1 aufgearbeitet. Es werden 64,9 g Produkt mit einem P-Gehalt von 11,5 Gew.-% erhalten (96,4 % P-Ausbeute).

### Beispiel 6

Unter Rühren werden 5,3 g (0,05 mol) Natriumhypophosphitmonohydrat, in einer Mischung von 243 g Ethanol, und 24 g konzentrierter Schwefelsäure vorgelegt. Während die Reaktionslösung 10 h am Rückfluss gekocht (ca. 78°C) wird, werden 3,9 g (AIBN VAZO 64 (Dupont-Biesteritz) und 51,9 g (0,5 mol) Styrol mit einer Pumpe zudosiert. Die Reaktionslösung wird wie in Beispiel 1 aufgearbeitet. Es werden 49,7 g Produkt mit einem P-Gehalt von 2,7 Gew.-% erhalten (86,6 % P-Ausbeute).

### Beispiel 7

Unter Rühren werden 53 g (0,5 mol) Natriumhypophosphitmonohydrat, in einer Mischung von 243 g Ethanol, und 24 g konzentrierter Phosphorsäure vorgelegt. Während die Reaktionslösung 5 h am Rückfluss gekocht (ca. 78°C) wird, werden 3,9 g (AIBN VAZO 64 (Dupont-Biesteritz) und 51,9 g (0,5 mol) Styrol mit einer Pumpe zudosiert. Die Reaktionslösung wird wie in Beispiel 1 aufgearbeitet. Es werden 74,5 g Produkt mit einem P-Gehalt von 17,9 Gew.-% erhalten (86,1% P-Ausbeute).

### Beispiel 8

Unter Rühren werden 26,5 g (0,25 mol) Natriumhypophosphitmonohydrat, in 100 g Wasser vorgelegt. Während die Reaktionslösung 5 h auf ca. 95°C) erhitzt wird, werden 2,9 g Natriumpersulfat (ihrerseits in 50 g Wasser gelöst) und 51,9 g (0,5 mol) Styrol jeweils mit einer Pumpe zudosiert. Die Reaktionslösung wird mit 24 g konzentrierter Schwefelsäure angesäuert und wie in Beispiel 1 aufgearbeitet. Es werden 59,8 g Produkt mit einem P-Gehalt von 10,0 Gew.-% erhalten (77,0 % P-Ausbeute).

### Beispiel 9

Unter Rühren werden 39,8 g (0,38 mol) Natriumhypophosphitmonohydrat, in einer Mischung von 100 g Wasser und 1,8 g Natriumlaurylsulfat vorgelegt. Während die Reaktionslösung 5 h auf ca. 95°C) erhitzt wird, werden 0,4 g Natriumpersulfat (ihrerseits in 50 g Wasser gelöst) und 58,9 g (0,5 mol) Alpha-Methylstyrol jeweils mit einer Pumpe zudosiert. Die Reaktionslösung wird mit 34,39g einer wässrigen Aluminiumsulfat-Lösung (4,3% Aluminium) versetzt. Das ausgefallene Produkt wird abfiltriert, mit 200 g demin Wasser gewaschen und 5 h bei 120°C getrocknet. Es werden 82,32 g Produkt mit einem P-Gehalt von 12,37 Gew.-% erhalten (86,5 % P-Ausbeute)

### Beispiel 10 Al-Salz

Unter Rühren werden 53 g (0,5 mol) Natriumhypophosphitmonohydrat, in einer Mischung von 283 g Wasser und 1,0 g linearem Natriumdodecylbenzolsulfonat vorgelegt. Während die Reaktionslösung 5 h auf ca. 95°C) erhitzt wird, wird eine Mischung von 0,2 g Pinenhydroperoxid (44 % aktiv) und 51,9 g (0,5 mol) Styrol mit einer Pumpe zudosiert. Die Reaktionslösung wird mit 42,1g einer wässrigen Aluminiumsulfat-Lösung (4,3% Aluminium) versetzt. Das ausgefallene Produkt wird abfiltriert, mit 200 g demin Wasser gewaschen und 5 h bei 120°C getrocknet. Es werden 81,4 g Produkt mit einem P-Gehalt von 15,3 Gew.-% erhalten (80,5 % P-Ausbeute)

### Beispiel 11 Al Salz

Unter Rühren werden 53 g (0,5 mol) Natriumhypophosphitmonohydrat, in 150 g Eisessig vorgelegt. Während die Reaktionslösung 5 h auf ca. 95°C) erhitzt wird, werden eine Mischung von 0,7 g Wako V50 (2,2' - Azobis(2-amidinopropanhydrochlorid, Wako-Chemicals) in 25 g Eisessig und 50 g Wasser beziehungsweise 51,9 g (0,5 mol) Styrol mit jeweils einer Pumpe zudosiert. Von der Reaktionslösung wird im Vakuum das Lösungsmittel abdestilliert und der Rückstand mit demin Wasser auf 200 g Gesamtmasse aufgefüllt. Die Lösung wird mit 46,5 g einer wässrigen Aluminiumsulfat-Lösung (4,3 % Aluminium) versetzt. Das ausgefallene Produkt wird abfiltriert, mit 200 g demin Wasser gewaschen und 5 h bei 120°C getrocknet. Es werden 83,8 g Produkt mit einem P-Gehalt von 16,5 Gew.-% erhalten (89,0 % P-Ausbeute).

### Beispiel 12

19 Teile des Flammschutzmittels aus Beispiel 3 werden mit 52 Teilen Polystyrol 2712 (BASF AG), 30 Teilen Glasfasern vermischt und auf einem Doppelschnecken-Extruder (Typ Leistritz LSM 30/34) bei Temperaturen von 250 bis 300°C eingearbeitet. Der homogenisierte Polymerstrang wird abgezogen, im Wasserbad gekühlt und anschließend granuliert. Nach ausreichender Trocknung wurden die Granulate auf einer Spritzgießmaschine (Typ Aarburg Allrounder) bei Massetemperaturen von 250 bis 300°C zu Formkörpern verarbeitet. Im UL94-Brandtest wird die V-0-Klassifizierung erzielt.

### Beispiel 13

23 Teile des Flammschutzmittels aus Beispiel 10 werden mit 47 Teilen Polystyrol 2712 (BASF AG), 30 Teilen Glasfasern vermischt und auf einem Doppelschnecken-Extruder (Typ Leistritz LSM 30/34) bei Temperaturen von 250 bis 300°C eingearbeitet. Der homogenisierte Polymerstrang wird abgezogen, im Wasserbad gekühlt und anschließend granuliert. Nach ausreichender Trocknung wurden die Granulate auf einer Spritzgießmaschine (Typ Aarburg Allrounder) bei Massetemperaturen von 250 bis 300°C zu Formkörpern verarbeitet. Im UL94-Brandtest wird die V-0-Klassifizierung erzielt.

## Patentansprüche

1. Styrol-Hypophosphit-Addukt der Formel (1)
{R₉ [C(Ph(R₁, R₂, R₃, R₄, R₅))R₆-CR₇R₈]ₙ}ₘP(O)(O 1/x M^{x+})(R₁₀)₂₋ₘ
in der
R₁, R₂, R₃, R₄, R₅, R₆, R₇, R₈ gleich oder verschieden sind und Wasserstoff, Alkyl, linear oder verzweigt, Aryl-, Aralkyl, Oxoalkyl, Oxoaryl, Aminoalkyl und/oder Aminoaryl,
R₉ H oder Radikalinitiatorrest
R₁₀ H
M^{x+} Li, Na, K, Mg, Ca, Sr, Ba, Al, Ge, Sn, Bi, Sb, Pb, Ti, TiO, Zr, ZrO, Zn, Fe, Ce, Mn und/oder eine protonierte Stickstoffbase mit der Wertigkeit x,
m = 1 oder 2 und
n = 1 bis 100 bedeutet und die Anzahl der in die P-H-Bindung eingeschobenen Styroleinheiten C(Ph(R₁, R₂, R₃, R₄, R₅))R₆-CR₇R₈ darstellt.

2. Styrol-Hypophosphit-Addukt nach Anspruch 1, **dadurch gekennzeichnet, dass** R₁, R₂, R₃, R₄, R₅, R₆, R₇, R₈ gleich oder verschieden sind und Wasserstoff; Methyl, Ethyl, n-Propyl-, n-Butyl, n-Pentyl; i-Propyl-, i-Butyl-, t-Butyl, Neo-Pentyl; Phenyl; Hydroxy, Methoxy, Ethoxy, Propoxy, Butoxy, Phenoxy; Amino, Methylamino-, Ethylmino-, Propylamino-, Butylamino-, N,N-Dimethylamino-, Diethylamino-, Dipropylamino-, Dibutylamino und n = 1 bis 10 bedeutet.

3. Styrol-Hypophosphit-Addukt nach Anspruch 1 oder 2, **dadurch gekennzeichnet, dass** es einen Phosphorgehalt von 8 bis 25 Gew.-% aufweist.

4. Styrol-Hypophosphit-Addukt nach Anspruch 1 oder 2, **dadurch gekennzeichnet, dass** es einen Phosphorgehalt von 11 bis 20 Gew.-% aufweist.

5. Styrol-Hypophosphit-Addukt nach einem oder mehreren der Ansprüche 1 bis 4, **dadurch gekennzeichnet, dass** es eine Teilchengröße von 10 bis 100 µm aufweist, der Anteil der aus dem Initiator herrührenden Seitenketten R₉ unter 18 % liegt und das Styrolbindevermögen 360 bis 650 mg Styrol/g beträgt.

6. Phosphorhaltiges Flammschutzmittel, enthaltend 50 bis 99 Gew.-% Styrol-Hypophosphit-Addukt der Ansprüche 1 bis 5 und 1 bis 50 Gew.-% eines oder mehrere Additive.

7. Phosphorhaltiges Flammschutzmittel nach Anspruch 6, **dadurch gekennzeichnet, dass** es sich bei dem Additiv um Stickstoffverbindungen der Formeln (III) bis (VIII) oder Gemische davon 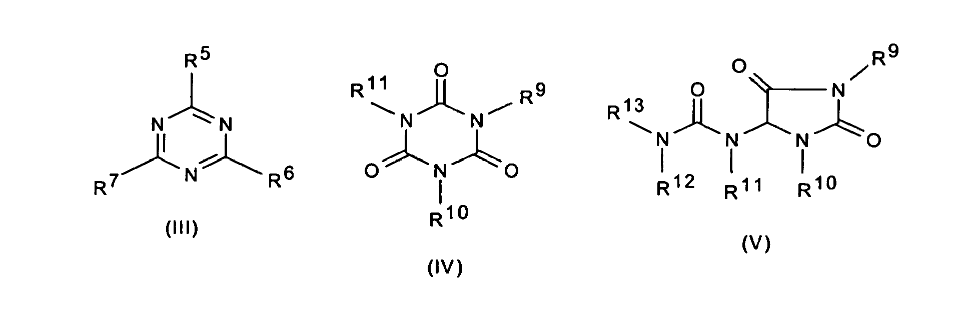 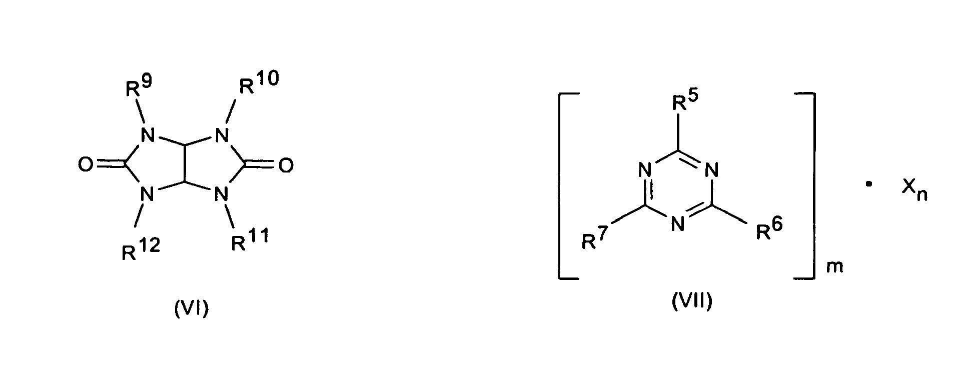 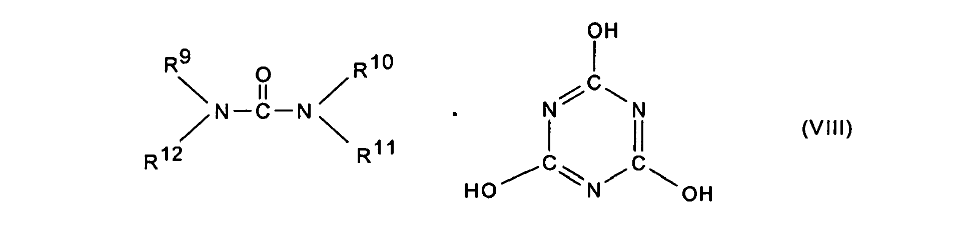 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten, handelt.

8. Phosphorhaltiges Flammschutzmittel nach Anspruch 6 oder 7, **dadurch gekennzeichnet, dass** es sich bei dem Additiv um Melaminphosphat, Dimelaminphosphat, Melaminpyrophosphat, Melaminpolyphosphate, Melampolyphosphate, Melempolyphosphate und/oder Melonpolyphosphate; um Melaminkondensationsprodukte wie Melam, Melem und/oder Melon; um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin; stickstoffhaltige Phosphate der Formeln (NH₄)_{y} H₃-_{y} PO₄ bzw. (NH₄ PO₃)_{z}, mit y gleich 1 bis 3 und z gleich 1 bis 10.000; um eine synthetische anorganische Verbindung und/oder ein mineralisches Produkt handelt.

9. Phosphorhaltiges Flammschutzmittel nach einem oder mehreren der Ansprüche 6 bis 8, mit einer Teilchengröße von 0,1 bis 2000 µm und einer verbleibenden Feuchte von 0,01 bis 10 Gew.-%.

10. Phosphorhaltiges Flammschutzmittel nach einem oder mehreren der Ansprüche 6 bis 9, mit einer Teilchengröße von 10 bis 200 µm und einer verbleibenden Feuchte von 0,05 bis 1 Gew.-%.

11. Pulverformmassen, enthaltend
1 bis 50 Gew.- % des phosphorhaltigen Flammschutzmittels nach einem oder mehreren der Ansprüche 6 bis 10
1 bis 99 Gew.-% polystyrolbasierendes Polymer oder Mischungen derselben
0 bis 60 Gew.-% Additive
0 bis 60 Gew.-% Füllstoff.

12. Polymerformkörper, -Filme, -Fäden und -Fasern, enthaltend
1 bis 50 Gew.- % des phosphorhaltigen Flammschutzmittels nach einem oder mehreren der Ansprüche 6 bis 10
1 bis 99 Gew.-% polystyrolbasierendes Polymer oder Mischungen derselben
0 bis 60 Gew.-% Additive
0 bis 60 Gew.-% Füllstoff.

13. Intumeszenz-Flammschutz-Beschichtung enthaltend
1 bis 50% des phosphorhaltigen Flammschutzmittels nach einem oder mehreren der Ansprüche 6 bis 10
0 bis 60% Ammoniumpolyphosphat
sowie 0 bis 80 Gew.-% Bindemittel, Schaumbildner, Füllstoffe und Additive.

## Claims

1. A styrene-hypophosphite adduct of the formula (I)
{R₉[C(Ph(R₁, R₂, R₃, R₄, R₅))R₆-CR₇R₈]ₙ}ₘP(O)(O 1/x M^{x+})(R₁₀)₂₋ₘ
where
R₁, R₂, R₃, R₄, R₅, R₆, R₇ and R₈ are identical or different and are hydrogen, alkyl, linear or branched, aryl, aralkyl, oxoalkyl, oxoaryl, aminoalkyl, and/or aminoaryl,
R₉ is H or a free-radical initiator radical,
R₁₀ is H,
M^{x+} is Li, Na, K, Mg, Ca, Sr, Ba, Al, Ge, Sn, Bi, Sb, Pb, Ti, TiO, Zr, ZrO, Zn, Fe, Ce, Mn, and/or a protonated nitrogen base having the valency x,
m = 1 or 2, and
n = from 1 to 100, and is the number of styrene units C(Ph(R₁, R₂, R₃, R₄, R₅))R₆-CR₇R₈ inserted into the P-H bond.

2. The styrene-hypophosphite adduct as claimed in claim 1, wherein R₁, R₂, R₃, R₄, R₅, R₆, R₇ and R₈ are identical or different, and are hydrogen; methyl, ethyl, n-propyl, n-butyl, n-pentyl; isopropyl, isobutyl, tert-butyl, neopentyl; phenyl; hydroxy, methoxy, ethoxy, propoxy, butoxy, phenoxy; amino, methylamino, ethylamino, propylamino, butylamino, N,N-dimethylamino, diethylamino, dipropylamino, or dibutylamino, and n is from 1 to 10.

3. The styrene-hypophosphite adduct as claimed in claim 1 or 2, whose phosphorus content is from 8 to 25% by weight.

4. The styrene-hypophosphite adduct as claimed in claim 1 or 2, whose phosphorus content is from 11 to 20% by weight.

5. The styrene-hypophosphite adduct as claimed in one or more of claims 1 to 4, whose particle size is from 10 to 100 µm, the content of the side chains R₉ deriving from the initiator being below 18%, and the styrene binding power being from 360 to 650 mg of styrene/g.

6. A phosphorus-containing flame retardant, comprising from 50 to 99% by weight of styrene-hypophosphite adduct of claims 1 to 5 and from 1 to 50% by weight of one or more additives.

7. The phosphorus-containing flame retardant as claimed in claim 6, wherein the additive is nitrogen compounds of the formulae (III) to (VIII) or a mixture of these 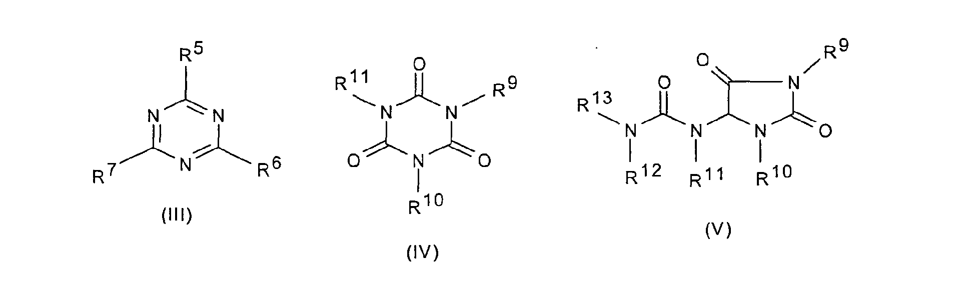 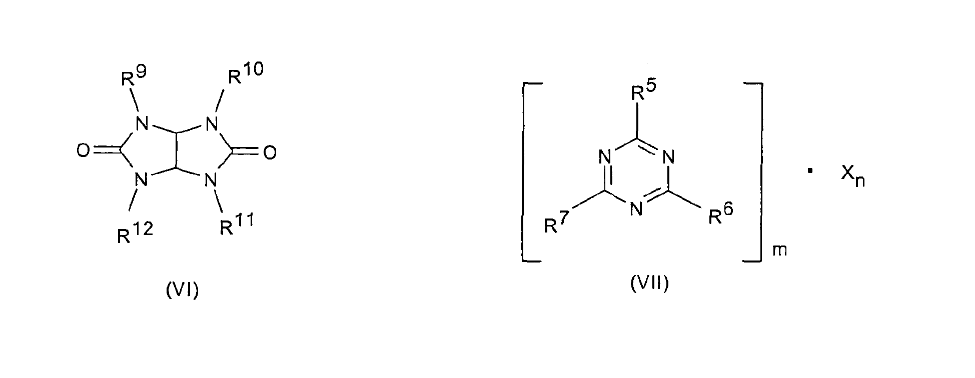 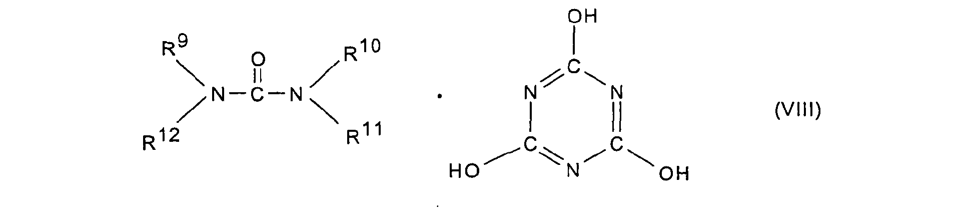 where
R⁵ to R⁷ is hydrogen, C₁-C₈-alkyl, C₅-C₁₆-cycloalkyl, or -alkylcycloalkyl, where appropriate substituted with a hydroxy function or with a C₁-C₄-hydroxyalkyl function, C₂-C₈-alkenyl, C₁-C₈-alkoxy, -acyl, -acyloxy, C₆-C₁₂-aryl or -arylalkyl, -OR⁸, or -N(R⁸)R⁹, or else a system of N-alicyclic or N-aromatic nature,
R⁸ is hydrogen, C₁-C₈-alkyl, C₅-C₁₆-cycloalkyl or -alkylcycloalkyl, where appropriate substituted with a hydroxy function or a C₁-C₄-hydroxyalkyl function, C₂-C₈-alkenyl, C₁-C₈-alkoxy, -acyl, -acyloxy, or C₆-C₁₂-aryl or -arylalkyl,
R⁹ to R¹³ are the same as the groups for R⁸, or else -O-R⁸,
m and n, independently of one another, are 1, 2, 3 or 4,
X is acids which can form adducts with triazine compounds (III).

8. The phosphorus-containing flame retardant as claimed in claim 6 or 7, wherein the additive is melamine phosphate, dimelamine phosphate, melamine pyrophosphate, melamine polyphosphates, melam polyphosphates, melem polyphosphates, and/or melon polyphosphates; melamine condensates, such as melam, melem and/or melon; oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, dicyandiamide, and/or guanidine; nitrogen-containing phosphates of the formulae (NH₄)_{y} H_{3-y} PO₄ or (NH₄ PO₃)_{z}, where y is from 1 to 3 and z is from 1 to 10,000; a synthetic inorganic compound, and/or a mineral product.

9. The phosphorus-containing flame retardant as claimed in one or more of claims 6 to 8, with a particle size of from 0.1 to 2000 µm, and with a residual moisture level of from 0.01 to 10% by weight.

10. The phosphorus-containing flame retardant as claimed in one or more of claims 6 to 9, with a particle size of from 10 to 200 µm, and with a residual moisture level of from 0.05 to 1 % by weight.

11. A powder molding composition, comprising
from 1 to 50% by weight of the phosphorus-containing flame retardant as claimed in one or more of claims 6 to 10
from 1 to 99% by weight of polystyrene-based polymer or a mixture of the same
from 0 to 60% by weight of additives
from 0 to 60% by weight of filler.

12. A polymer molding, a polymer film, a polymer filament, or a polymer fiber, comprising
from 1 to 50% by weight of the phosphorus-containing flame retardant as claimed in one or more of claims 6 to 10
from 1 to 99% by weight of polystyrene-based polymer or a mixture of the same
from 0 to 60% by weight of additives
from 0 to 60% by weight of filler.

13. An intumescent flame-retardant coating comprising
from 1 to 50% of the phosphorus-containing flame retardant as claimed in one or more of claims 6 to 10
from 0 to 60% of ammonium polyphosphate
and also from 0 to 80% by weight of binders, foamers, fillers, and additives.

## Revendications

1. Adduit d'hypophosphite et de styrène de formule (I)
{R₉[C(Ph(R₁, R₂, R₃, R₄, R₅))R₆-CR₇R₈]ₙ}ₘP(O) (O 1/x M^{x+}) (R₁₀)₂₋ₘ,
dans laquelle
R₁, R₂, R₃, R₄, R₅, R₆, R₇, R₈ sont identiques ou différents et représentent un hydrogène, alkyle, aryl-, aralkyle, oxoalkyle, oxoaryle, aminoalkyle et/ou aminoaryle linéaire ou ramifié,
R₉ représente H ou un radical d'amorceur radicalaire,
R₁₀ représente H,
M^{x+} représente Li, Na, K, Mg, Ca, Sr, Ba, Al, Ge, Sn, Bi, Sb, Pb, Ti, TiO, Zr, ZrO, Zn, Fe, Ce, Mn et/ou une base azotée protonée avec la valence x,
m = 1 ou 2 et
n = 1 à 100 et représente le nombre de motifs styrène C(Ph(R₁, R₂, R₃, R₄, R₅))R₆-CR₇R₈ incorporés dans la liaison P-H.

2. Adduit d'hypophosphite et de styrène selon la revendication 1, **caractérisé en ce que** R₁, R₂, R₃, R₄, R₅, R₆, R₇, R₈ sont identiques ou différents et représentent un hydrogène, méthyle, éthyle, n-propyle, n-butyle, n-pentyle, i-propyle, i-butyle, t-butyle, néo-pentyle ; phényle ; hydroxy, méthoxy, éthoxy, propoxy, butoxy, phénoxy ; amino, méthylamino, éthylamino, propylamino, butylamino, N,N-diméthylamino, diéthylamino, dipropylamino, dibutylamino et n vaut 1 à 10.

3. Adduit d'hypophosphite et de styrène selon la revendication 1 ou 2, **caractérisé en ce qu'**il présente une teneur en phosphore de 8 à 25 % en poids.

4. Adduit d'hypophosphite et de styrène selon la revendication 1 ou 2, **caractérisé en ce qu'**il présente une teneur en phosphore de 11 à 20 % en poids.

5. Adduit d'hypophosphite et de styrène selon une ou plusieurs des revendications 1 à 4, **caractérisé en ce qu'**il présente une taille de particules de 10 à 100 µm, **en ce que** la proportion des chaînes latérales R₉ provenant de l'amorceur se situe au-dessous de 18 % et la capacité de liaison de styrène est de 360 à 650 mg styrène/g.

6. Agent pare-flammes contenant du phosphore, contenant 50 à 99 % en poids d'adduit d'hypophosphite et de styrène selon les revendications 1 à 5 et 1 à 50 % en poids d'un ou de plusieurs additifs.

7. Agent pare-flammes contenant du phosphore selon la revendication 6, **caractérisé en ce qu'**il s'agit pour l'additif de composés d'azote des formules (III) à (VIII) ou de leurs mélanges 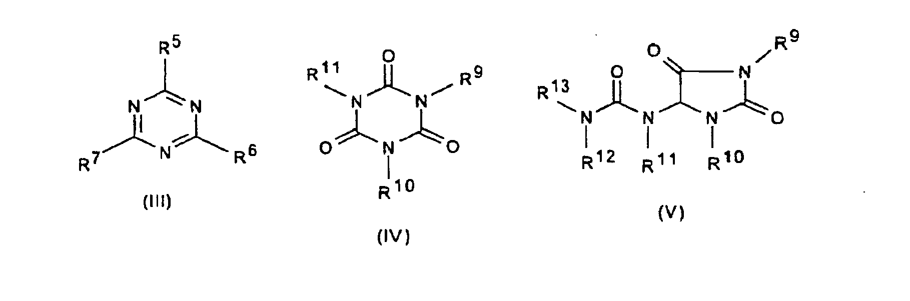 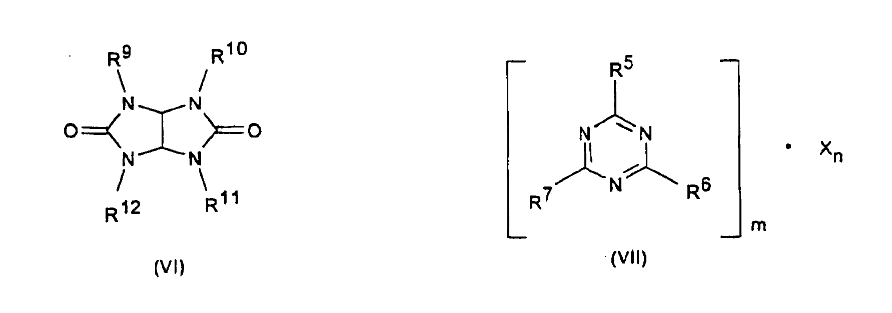 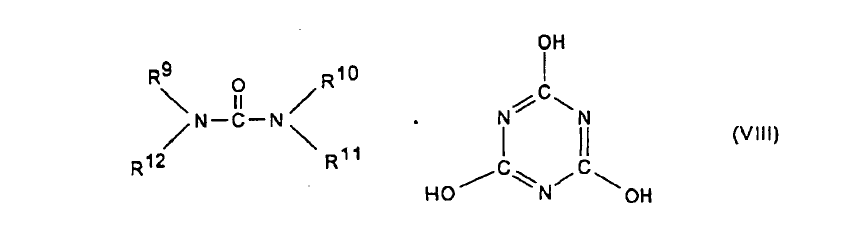 dans lesquelles
R⁵ à R⁷ représente un hydrogène, alkyle en C₁ à C₈, cycloalkyle ou alkylcycloalkyle en C₅ à C₁₆, éventuellement substitué avec une fonction hydroxy ou hydroxyalkyle en C₁ à C₄, alcényle en C₂ à C₈, alcoxy, acyle, acyloxy en C₁ à C₈, aryle ou arylalkyle en C₆ à C₁₂, -OR⁸et -N(R⁸)R⁹, ainsi que N-alicyclique ou N-aromatique,
R⁸ représente un hydrogène, alkyle en C₁ à C₈, cycloalkyle ou alkylcycloalkyle en C₅ à C₁₆, éventuellement substitué avec une fonction hydroxy ou hydroxyalkyle en C₁ à C₄, alcényle en C₂ à C₈, alcoxy, acyle, acyloxy en C₁ à C₈ ou aryle ou arylalkyle en C₆ à C₁₂,
R⁹ à R¹³ représente des groupes identiques à R⁸ ou -OR⁸,
m et n représentent indépendamment l'un de l'autre 1, 2, 3 ou 4,
X représentent des acides qui peuvent former des adduits avec des composés triazine (III).

8. Agent pare-flammes contenant du phosphore selon la revendication 6 ou 7, **caractérisé en ce qu'**il s'agit pour l'additif de phosphate de mélamine, phosphate de dimélamine, pyrophosphate de mélamine, polyphosphate de mélamine, polyphosphate de melam, polyphosphate de melem et/ou polyphosphate de melon ; de produits de condensation de mélamine comme le melam, le melem et/ou le melon ; d'esters oligomères du tris(hydroxyéthyl)isocyanurate avec des acides polycarboxyliques aromatiques, de benzoguanamine, tris(hydroxyéthyl)isocyanurate, allantoïne, glycolurile, mélamine, cyanurate de mélamine, dicyandiamide et/ou guanidine ; phosphates azotés de formules (NH₄)_{y}H_{3-y}PO₄ ou (NH₄ PO₃)_{z}, avec y égal à 1 à 3 et z égal à 1 à 10 000 ; d'un composé inorganique synthétique et/ou d'un produit minéral.

9. Agent pare-flammes contenant du phosphore selon une ou plusieurs des revendications 6 à 8, avec une taille de particules de 0,1 à 2 000 µm et une humidité résiduelle de 0,01 à 10 % en poids.

10. Agent pare-flammes contenant du phosphore selon une ou plusieurs des revendications 6 à 9, avec une taille de particules de 10 à 200 µm et une humidité résiduelle de 0,05 à 1 % en poids.

11. Compositions en forme de poudre, contenant
1 à 50 % en poids de l'agent pare-flammes contenant du phosphore selon une ou plusieurs des revendications 6 à 10
1 à 99 % en poids de polymère à base de polystyrène ou de mélanges de ceux-ci
0 à 60 % en poids d'additifs
0 à 60 % en poids de charge.

12. Corps moulés, films, fils et fibres polymères, contenant
1 à 50 % en poids de l' agent pare-flammes contenant du phosphore selon une ou plusieurs des revendications 6 à 10
1 à 99 % en poids de polymère à base de polystyrène ou de mélanges de ceux-ci
0 à 60 % en poids d'additifs
0 à 60 % en poids de charge.

13. Revêtement pare-flammes intumescent contenant
1 à 50 % en poids de l'agent pare-flammes contenant du phosphore selon une ou plusieurs des revendications 6 à 10
0 à 60 % en poids de polyphosphate d'ammonium
0 à 80 % en poids de liant, d'agent moussant, de charges et d'additifs.
